# EUROPEAN PATENT APPLICATION

(11) **EP 4 105 812 A1**
(43) Date of publication of application: **21.12.2022**
(21) Application number: 21382635.7
(22) Date of filing: 13.07.2021
(51) Int. Cl.: G06F 40/18

(54) **METHOD AND SYSTEM FOR PROVIDING QUANTUM COMPUTING AS A SERVICE TO A SPREADSHEET APPLICATION**

(30) Priority: 17.06.2021 US 202117350669
(71) Applicant: Multiverse Computing S.L., 20014 Donostia-San Sebastian (ES)
(72) Inventor: ORUS LACORT, Roman Oscar, Donostia (ES); SAHIN, Serkan, Donostia (ES); HERNANDEZ CIFUENTES, Rodrigo, Donostia (ES); MUGEL, Samuel, Toronto (CA); PALMER, Samuel Douglas, Toronto (CA)
(74) Representative: Igartua, Ismael

(57) **Abstract**

Platform for providing quantum computing as a service comprising a frontend computing system (1) comprising a frontend computer program, a backend computing system (2), and a quantum computer (3). The frontend computer program is a spreadsheet application configured to receive a service request (4) from a user, the service request (4) comprising service request parameters and input data (13). The frontend computing system (1) is configured to send the service request (4) to the backend computing system (2), which is configured to encode it to a service job in a format suitable for the quantum computer to execute, and to submit the service job to the quantum computer (3). The quantum computer (3) is configured to execute the service job and to provide service job results to the backend computing system (2), which translates them into results data (14) and sends them to the frontend computing system (2).

## Description

### TECHNICAL FIELD

The present invention relates to methods and systems for quantum computing.

### PRIOR ART

Quantum computers have the potential to revolutionize computation by making certain types of classically intractable problems solvable. However, building quantum computers is incredibly difficult, and even just quantum programming can be extremely complicated for a programmer. Therefore, it is necessary to make quantum technology available to users, isolating them from the complexity involved in quantum computing.

US2020027029A1 discloses a computer implemented method for solving computational tasks by using quantum computing resources. The method includes receiving, at a quantum formulation solver, data representing a computational task to be performed; deriving, by the quantum formulation solver, a formulation of the data representing the computational task that is formulated for a selected type of quantum computing resource; routing, by the quantum formulation solver, the formulation of the data representing the computational task to a quantum computing resource of the selected type to obtain data representing a solution to the computational task; generating, at the quantum formulation solver, output data including data representing a solution to the computational task; and receiving, at a broker, the output data and generating one or more actions to be taken based on the output data.

### DISCLOSURE OF THE INVENTION

The object of the invention is to provide a method and a system for quantum computing, as defined in the claims.

The system for providing quantum computing as a service of the invention comprises a frontend computing system comprising a frontend computer program, a backend computing system, and a quantum computer.

The frontend computer program is a spreadsheet application and is configured to receive a service request from a user. The service request comprises service request parameters and input data, and the frontend computing system is configured to store the input data in the spreadsheet application and to send the service request to the backend computing system.

The backend computing system is configured to receive the service request from the frontend computing system, to encode the service request to a service job in a format suitable for the quantum computer to execute the service request, and to submit the service job to the quantum computer.

The quantum computer is configured to execute the service job and to provide service job results to the backend computing system.

The backend computing system is configured to translate the service job results into results data and to send them to the frontend computing system. Finally, the frontend computing system is configured to receive the results data, to store the results data in the spreadsheet application, and to display the results data in the spreadsheet application interface associated with the spreadsheet application.

A second aspect of the invention relates to a computer implemented method for providing quantum computing as a service. The computer implemented method of the invention comprises receiving a service request comprising service request parameters and input data at a backend computing system from a frontend computing system, the frontend computing system being configured to receive the service request from a user at a spreadsheet application executable at the frontend computing system and to store the input data in the spreadsheet application. The computer implemented method comprises the backend computing system encoding the service request to a service job in a format suitable for a quantum computer to execute the service request, and submitting the service job to the quantum computer, the quantum computer being configured to execute the service job and to provide service job results. The computer implemented method comprises the backend computing system receiving the service job results from the quantum computer. Finally, the computer implemented method comprises the backend computing system translating the service job results into results data and sending the results data to the frontend computing system, the frontend computing system being configured to receive the results data, to store the results data in the spreadsheet application, and to display the results data in a spreadsheet application interface associated with the spreadsheet application.

Quantum computers have the potential to revolutionize computation by making certain types of classically intractable problems solvable. However, quantum computers are scarce, and accessing to quantum computers may be expensive, or even inaccessible due to geographical limitations. At the same time, quantum programming can be extremely complicated for a programmer. The systems and methods disclosed and contemplated herein make quantum technology available to users, isolating them from the complexity involved in quantum computing. The systems and methods allow the shared or distributed access to quantum computing from a spreadsheet application, so that the user of the spreadsheet application is not required to have a deep understanding of quantum computing, its implementation, nor the knowledge required for solving a computational problem by a quantum computer.

Spreadsheets applications are widely used in many fields and are becoming increasingly important for analyzing data in today's businesses. Users are accustomed to analyzing and managing data in spreadsheets applications and feel reluctant to adapt themselves to other applications to manage and analyze data. The system for providing quantum computing as a service allows users to continue using spreadsheet applications while benefiting from the computational possibilities offered by quantum computing.

These and other advantages and features of the invention will become evident in view of the drawings and the detailed description of the invention.

### DESCRIPTION OF THE DRAWINGS

FIG. 1 illustrates a logical diagram of a non-limiting embodiment of a system for providing quantum computing as a service.
FIG. 2 illustrates a first embodiment of an input form of a spreadsheet plug-in of a spreadsheet application.
FIG. 3 illustrates a second embodiment of the input form of a spreadsheet plug-in of a spreadsheet application.
FIG. 4 is a flow chart depicting a method for providing quantum computing as a service, in accordance with an example embodiment.
FIG. 5 is a block diagram depicting a computing device, in accordance with an example embodiment.

### DETAILED DISCLOSURE OF THE INVENTION

The figures and the following description relate to embodiments by way of illustration only. It should be noted that a person skilled in the art will recognize that other components and configurations may be used without departing from the spirit and scope of the subject matter of this disclosure.

Unless otherwise defined, all technical terms used herein have the same meaning as commonly understood by a skilled person in the art to which this invention belongs. As used in this specification and the appended claims, the singular forms "a", "an", and "the" also include plural references unless the context clearly dictates otherwise.

Present embodiments provide quantum computing as a service. Quantum computers have the potential to revolutionize computation by making certain types of classically intractable problems solvable. However, quantum computers are scarce, and accessing to quantum computers may be expensive, or even inaccessible due to geographical limitations. Thus, present embodiments enable conventional computing devices to access quantum computing devices, providing the practical application of enabling those conventional computing devices to perform operations that the conventional computing devices would otherwise be unable to perform. For example, by providing input data to a spreadsheet that is converted into a quantum-computer-executable job, desired computing operations can be performed much more quickly and/or operations that would otherwise be impossible for a computer to perform can be carried out. Additionally, present embodiments enable the automatic converting and processing of input data in a manner that does not require end user understanding of quantum computing, thereby enhancing the experience of end users.

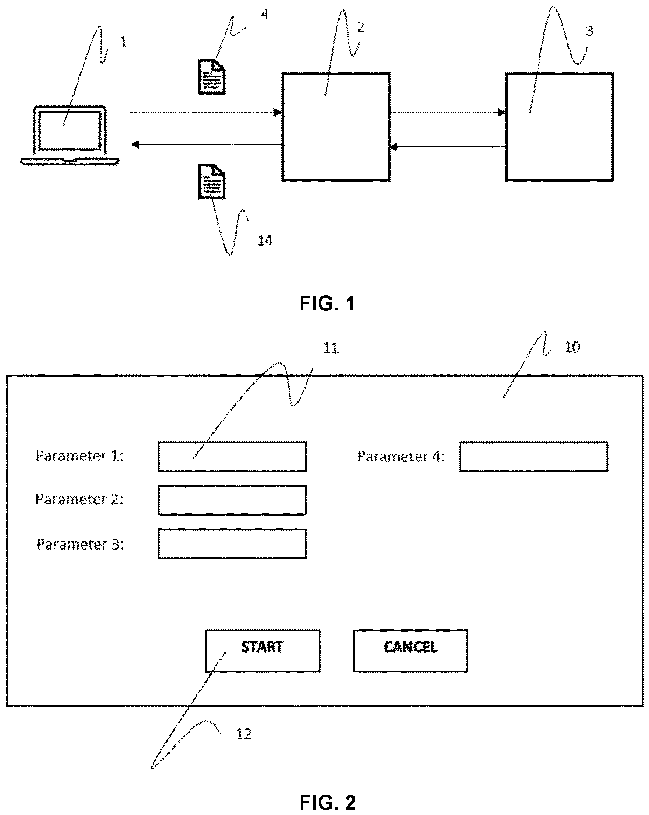

FIG. 1 shows a logical diagram of a system for providing quantum computing as a service, according to one embodiment. The system comprises a frontend computing system 1 comprising a frontend computer program, a backend computing system 2, and a quantum computer 3.

The frontend computer program of the frontend computing system 1 is a spreadsheet application and is configured to receive a service request 4 from a user, the service request 4 comprising service request parameters and input data 13. The frontend computing system 1 is configured to store the input data 13 in the spreadsheet application and to send the service request 4 to the backend computing system 2.

The backend computing system 2 is configured to receive the service request 4 from the frontend computing system 1, to encode the service request 4 to a service job in a format suitable for the quantum computer 3 to execute it, and to submit the service job to the quantum computer 3.

The quantum computer 3 is configured to execute the service job and to provide service job results to the backend computing system 2, the backend computing system 2 being configured to translate the service job results into results data 14 and to send them to the frontend computing system 1.

Finally, the frontend computing system 1 is configured to receive the results data 14, to store the results data 14 in the spreadsheet application, and to display the results data 14 in a spreadsheet application interface associated with the spreadsheet application.

The frontend computing system 1 comprises one or more processing units, and a non-transitory computer-readable medium configured to store the frontend computer program, the one or more processing units being configured to execute said frontend computer program. The frontend computing system 1 is configured to communicate with other computing systems via a network to which the frontend computing system 1 is connected to, which can be located in the same network of the frontend computing system 1, or in a different computer network.

According to one embodiment, the frontend computer program of the frontend computing system 1 is a spreadsheet application. Spreadsheets applications are widely used in many fields and are becoming increasingly important for analyzing data in today's businesses. There are several spreadsheet applications available in the market such as, for example, Microsoft^{®} Excel^{®}, Google^{®} Sheets, Lotus^{®} Symphony Spreadsheets, OpenOffice^{®} Calc, LibreOffice^{®} Calc, iWork^{®} Numbers, or the like. Users are used to analyze and manage data in spreadsheets applications and feel reluctant to adapt themselves to other applications to manage and analyze data. The system for providing quantum computing as a service allows users to continue using spreadsheet applications while benefiting from the computational possibilities offered by quantum computing. The user interacts with the quantum computing service through the spreadsheet application, so, the user does not need to learn or adapt to a new application or tool to access quantum computing. This facilitates the adoption of the system by users, as time investment in learning a new application or tool is avoided, while users can continue working with the spreadsheet application, which is the application they feel comfortable with, and the one they prefer.

The user of the frontend computing system 1 introduces a service request 4 in the spreadsheet application, the service request 4 comprising service request parameters and input data 13. The input data 13 is the data that has to be introduced in the spreadsheet application, and the data based on which the service request 4 will be executed. The user can manually introduce the input data 13 in the spreadsheet application, or it can be imported from another application, or any source of data with which the spreadsheet application can communicate with. Once introduced, the input data 13 is stored in the spreadsheet application. The service request parameters can include, among others, a location in the spreadsheet application of the input data 13 that will be used by the service request 4, a location in the spreadsheet application where the results data 14 will be stored, and any other parameters necessary for the service request 4 to be executed. Once the user introduces the service request parameters and the input data 13, the user submits the service request 4, and responsive to that submission of the service request 4, the service request 4 is sent by the spreadsheet application to the backend computing system 2.

The backend computing system 2 comprises one or more processing units, and a non-transitory computer-readable medium having encoded thereon computer executable instructions to cause the one or more processing units to execute a backend computer application. The backend computer application is configured to receive the service request 4 sent by the spreadsheet application, encode the service request 4 to a service job in a format suitable for the quantum computer 3 to execute it, and to submit the service job to the quantum computer 3.

In an embodiment of the system, the backend computing system 2 is a local computing system, that is, a computing system in the same network as the frontend computing system 1. In another embodiment, the backend computing system is a cloud computing system. In another embodiment of the system, the backend computing system 2 is a distributed computing system.

In one embodiment of the system, the backend computer application comprises an Application Program Interface server or API server, and a plurality of job workers. The API server comprises a plurality of endpoints. Each endpoint is an address that can be reached by a service request 4, each endpoint being configured to receive the service request 4 sent by the spreadsheet application and access its corresponding functionality, which will be executed by the assigned job worker or workers. The job worker is configured to submit the service job to the quantum computer 3. The API server and job worker design scheme of the backend computer application is commonly used and is well known to a skilled person.

In one embodiment of the system, the backend computer application is a Python application.

In one embodiment of the system, the Python application is deployed in a Docker container in Amazon Web Services^{®}, also known as AWS^{®}.

According to one embodiment, the endpoints of the API server of the backend computer application are Representational state transfer (REST, also referred to as RESTful) API Uniform Resource Locator (URL) endpoints.

According to one embodiment, the quantum computer 3 comprises one or more quantum processing units configured to execute the service job, which will comprise one or more quantum algorithms. Any quantum computer may be suitable for the system of the invention. Examples of quantum computers include, but are not limited to, adiabatic quantum computers, gate based quantum computers, trapped ion quantum computers, photonic quantum computers, etc.

According to one embodiment, the quantum computer 3 executes the service job submitted by the backend computing system 2 and provides service job results to the backend computing system 2. The worker of the backend computing system 2 retrieves the service job results, interprets them, translates them into results data 14 that the user can interact with and understand, and sends them to the frontend computing system 1. The frontend computing system 1 receives the results data 14, stores the results data 14 in the spreadsheet application, and displays the results data 14 in the spreadsheet application interface associated with the spreadsheet application.

According to one embodiment, the spreadsheet application comprises a plurality of spreadsheet cells configured to store the input data 13, a parameter control configured to receive a service request parameter, and a command control configured to send the service request 4 to the backend computing system 2.

The input data 13 is stored in the spreadsheet application in the form of tables, as the table is the native data structure in a spreadsheet application. A table is formed by rows and columns, whose intersections define the spreadsheet cells. The spreadsheet cells are configured to store input data 13 of different types: numbers, words, dates, alphanumeric symbols, etc., to perform operations between cells, etc. The spreadsheet application comprises a plurality of spreadsheet worksheets, each of the spreadsheet worksheets comprising a plurality of spreadsheet cells. The spreadsheet application is configured to store input data 13 in the spreadsheet cells of a spreadsheet worksheet, or of several spreadsheet worksheets.

The spreadsheet application comprises at least a parameter control in which the user will introduce one service request parameter. A parameter control can be a cell, a textbox, or any kind of control in a spreadsheet application known to a skilled person in the art in which a service request parameter can be introduced. The spreadsheet application further comprises at least a command control used to submit the service request 4 when the command control is activated, so that responsive to the command control activation the service request 4 will be sent by the spreadsheet application to the backend computer system 2. The command control can be a button, a checkbox, or any other kind of control that the user can select, click on, push, etc., so as to activate it.

According to one embodiment, the spreadsheet application comprises a spreadsheet plug-in, the spreadsheet plug-in being configured to manage the plurality of spreadsheet cells, the spreadsheet plug-in comprising the parameter control and the command control.

A spreadsheet plug-in is a program configured to extend the functionality of a spreadsheet application. The spreadsheet plug-in will be executed by the one or more processing units of the frontend computing system 1. A spreadsheet plug-in can be registered in a spreadsheet application so as to add the functionality provided by the plug-in to the spreadsheet application. The spreadsheet plug-in operates on the spreadsheet application and is configured to manage the spreadsheet cells. This is, the spreadsheet plug-in is configured to retrieve data stored in a spreadsheet cell, store data in spreadsheet cells, and operate with data stored in spreadsheet cells.

According to one embodiment, the spreadsheet plug-in comprises the parameter control and the command control, the parameter control and the command control being displayed in the spreadsheet application interface associated with the spreadsheet application.

According to one embodiment, the spreadsheet plug-in is reflected in the form of a new tab inside the spreadsheet application.

According to one embodiment, the spreadsheet plug-in is configured to receive the results data 14 from the backend computing system 2, to store the results data 14 in an additional plurality of spreadsheet cells, and to display the results data 14 in the spreadsheet application interface.

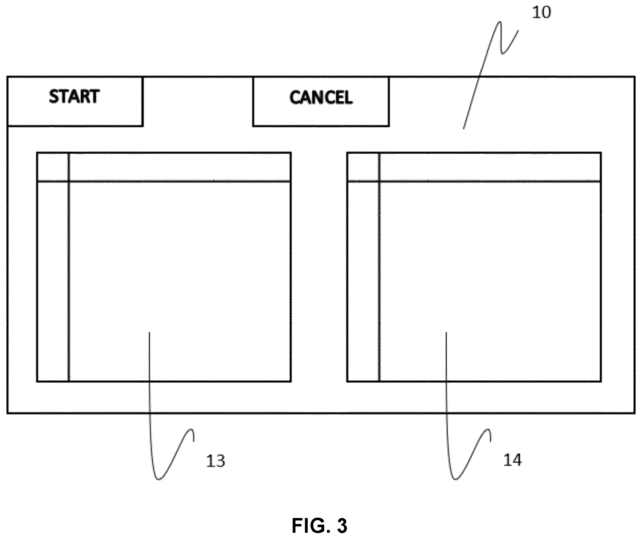

As shown in FIG. 2, according to one embodiment the spreadsheet plug-in comprises an input form 10 comprising the parameter control 11 and the command control 12, the input form 10 being displayed in the spreadsheet application interface associated with the spreadsheet application. In an alternative embodiment, the input form 10 comprises a plurality of spreadsheet cells configured to store the input data 13, so that the input data 13 can be introduced in the spreadsheet cells of the input form instead of in the spreadsheet cells of the spreadsheet worksheets of the spreadsheet application. In an alternative embodiment shown in FIG. 3, the input form 10 comprises an additional plurality of spreadsheet cells configured to store the results data 14, so that the results data 14 can be stored in the spreadsheet cells of the input form 10 instead of in the spreadsheet cells of the spreadsheet worksheets of the spreadsheet application by the spreadsheet plug-in.

According to one embodiment, the spreadsheet plug-in comprises a results form comprising the additional plurality of spreadsheet cells configured to store the results data 14, the results form being displayed in the spreadsheet application interface associated with the spreadsheet application. In this embodiment, the results data 14 can be stored in the spreadsheet cells of the results form instead of in the spreadsheet cells of the spreadsheet worksheets of the spreadsheet application by the spreadsheet plug-in.

According to one embodiment, the spreadsheet plug-in is written in Visual Basic programming language. In an embodiment of the system, the spreadsheet plug-in uses a library to implement a REST API interfacing protocol with the backend computing system 2.

According to one embodiment, the backend computing system 2 is configured to clean and reformat the input data 13 before encoding the service request 4 to a service job. This way, the backend computing system 2 ensures that the input data 13 is suitable for quantum computation.

According to one embodiment, the service request 4 is an optimization request. In an embodiment of the system the optimization request is received by an endpoint of the API server of the backend computer application. The job worker is configured to encode the optimization request to an optimization service job in a format suitable for the quantum computer 3 to execute it. For that purpose, the job worker is configured to select an optimization routine which uses the input data 13 to formulate the optimization service job which will be submitted to the quantum computer 3.

According to one embodiment, the optimization service job is encoded as a quadratic binary optimization problem (QUBO).

According to one embodiment, the backend computing system 2 is configured to select a best result from the results data 14. When the worker of the backend computing system 2 retrieves the service job results, interprets them, and translates them into results data 14 that the user can interact with and understand, the worker is configured to select a best result from the results data 14, so that only the best result is sent to the frontend computing system 1, instead of sending the complete results data 14.

According to one embodiment, the quantum computer 3 is a DWave quantum computer. In an embodiment of the system, the backend computing system 2 is configured to submit the service job to the DWave quantum computer through the DWave's solver API.

In other embodiments, the quantum computer 3 can be any other quantum computer known to the skilled person. Other non-limiting examples of quantum computer providers are IonQ^{®}, Pasqal^{®}, Alpine^{®}, etc.

According to one embodiment, the spreadsheet application is Microsoft^{®} Excel^{®}.

According to one embodiment, the service request 4 is an optimization request of a portfolio of financial assets.

According to some embodiments, the system is configured to perform user authentication.

In some embodiments, the backend computing system 2 is configured to check that input data 13 with the correct data type has been introduced in the spreadsheet cells.

According to some embodiments, the system is configured to process and manage errors, which can be categorized in authentication errors, input data format errors, service request parameter format errors, input data validation errors, service request parameter validation errors, processing errors, and any other kind of errors the skilled person would consider managing.

According to some embodiments, the system is configured to provide results data asynchronously, for which purpose, the system is configured to provide service job status to the user, to retrieve results data under demand of the user.

A second aspect relates to a computer implemented method for providing quantum computing as a service. According to one embodiment the computer implemented method comprises receiving a service request 4 comprising service request parameters and input data 13 at a backend computing system 2 from a frontend computing system 1, the frontend computing system 1 being configured to receive the service request 4 from a user at a spreadsheet application executable at the frontend computing system 1 and to store the input data 13 in the spreadsheet application. The computer implemented method comprises the backend computing system 2 encoding the service request 4 to a service job in a format suitable for a quantum computer 3 to execute the service request 4, and submitting the service job to the quantum computer 3, the quantum computer 3 being configured to execute the service job and to provide service job results. The computer implemented method comprises the backend computing system 2 receiving the service job results from the quantum computer 3. Finally, the computer implemented method comprises the backend computing system 2 translating the service job results into results data 14 and sending the results data 14 to the frontend computing system 1, the frontend computing system 1 being configured to receive the results data 14, to store the results data 14 in the spreadsheet application, and to display the results data 14 in a spreadsheet application interface associated with the spreadsheet application.

According to some embodiments, receiving the service request 4 at the frontend computing system 1 comprises storing the input data 13 in a plurality of spreadsheet cells of the spreadsheet application, receiving at least one service request parameter in a parameter control of the spreadsheet application, and receiving a command input in a command control of the spreadsheet application. For that purpose, the frontend computing system 1 is configured to store the input data 13 in a plurality of spreadsheet cells of the spreadsheet application, to receive at least one service request parameter in a parameter control 11 of the spreadsheet application, and to receive a command input in a command control 12 of the spreadsheet application.

According to some embodiments, the spreadsheet application comprises a spreadsheet plug-in configured to manage the plurality of spreadsheet cells and comprising the parameter control and the command control, the spreadsheet plug-in being configured to send service request parameters and input data 13 to the backend computing system 2 upon receiving the command input in the command control 12.

According to some embodiments, the spreadsheet plug-in is configured to receive the results data 14 from the backend computing system 2, to store the results data 14 in an additional plurality of spreadsheet cells, and to display the results data 14 in the spreadsheet application interface upon receiving, storing, and displaying the results data 14 in the spreadsheet application by the frontend computing system 1.

According to some embodiments, the computer implemented method comprises the backend computing system 2 cleaning and reformatting the input data 13 after receiving the service request 4 from the frontend computing system 1, and before encoding the service request 4 to a service job.

According to some embodiments, the computer implemented method comprises the backend computing system 2 selecting a best result from the results data 14 before sending the results data 14 to the frontend computing system 1.

The computer implemented methods are adapted to be implemented in a system as previously described herein, in any of its embodiments and/or configurations, the method comprising an embodiment and/or configuration according to the embodiment and/or configuration of said system. Thus, what has been described for the system that has not been described for the method is also valid for said method.

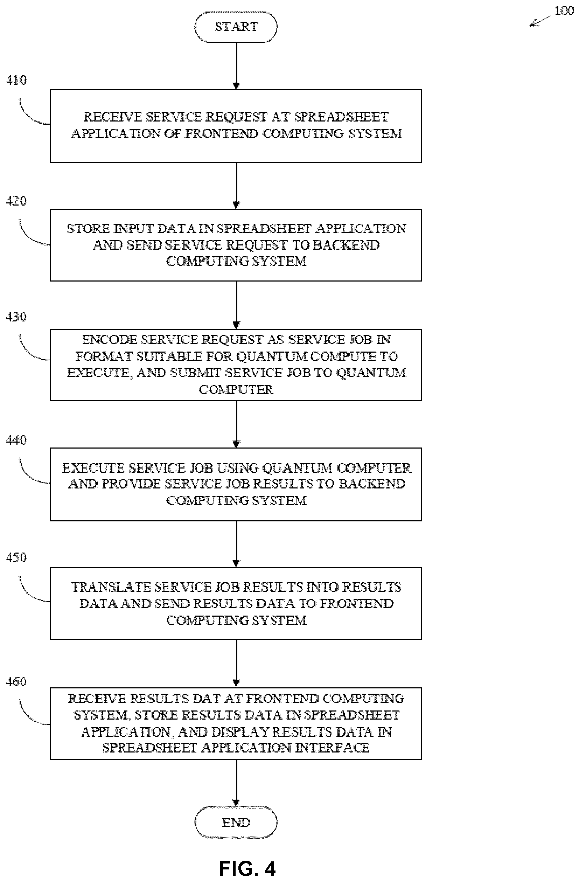

FIG. 4 illustrates a method 400 for providing quantum computing as a service.

A service request 4 may be received at a spreadsheet application executable at a frontend computing system 1 (e.g., computing device 500) at operation 410. The service request 4 may comprise one or more service request parameters and input data 13.

The frontend computing system 1 may store the input data 13 in the spreadsheet application, and may send the service request 4 to a backend computing system 2 at operation 420.

The backend computing system 2 (e.g., computing device 500) may encode the service request 4 to a service job in a format suitable for a quantum computer 3 to execute the service request 4, and the backend computing system 2 may submit the service job to the quantum computer 3 at operation 430.

The quantum computer 3 may execute the service job and may provide service job results to the backend computing system 2 at operation 440.

The backend computing system 2 may translate the service job results into results data 14 and may send the results data 14 to the frontend computing system 1 at operation 450.

The frontend computing system 1 may receive the results data 14, may store the results data 14 in the spreadsheet application, and may display the results data 14 in a spreadsheet application interface associated with the spreadsheet application at operation 460.

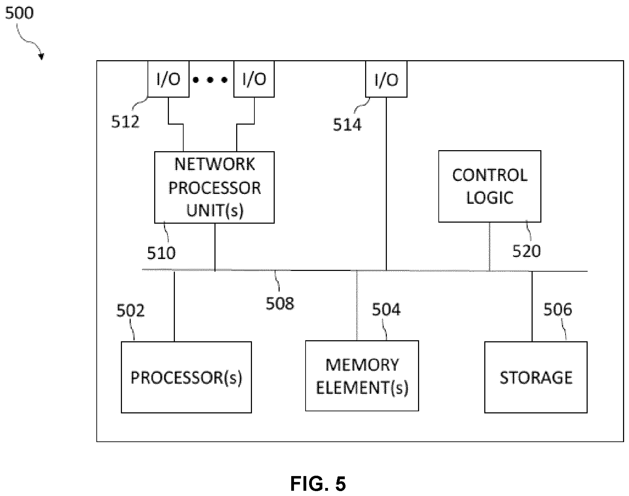

FIG. 5 illustrates a hardware block diagram of a computing device 500 that may perform functions associated with operations discussed herein in connection with the techniques depicted in FIGS. 1-4. In various embodiments, a computing device, such as computing device 500 or any combination of computing devices 500, may be configured as any entity/entities as discussed for the techniques depicted in connection with FIGs. 1-4 in order to perform operations of the various techniques discussed herein.

In at least one embodiment, the computing device 500 may include one or more processor(s) 502, one or more memory element(s) 504, storage 506, a bus 508, one or more network processor unit(s) 510 interconnected with one or more network input/output (I/O) interface(s) 512, one or more I/O interface(s) 514, and control logic 520. In various embodiments, instructions associated with logic for computing device 500 can overlap in any manner and are not limited to the specific allocation of instructions and/or operations described herein.

In at least one embodiment, processor(s) 502 is/are at least one hardware processor configured to execute various tasks, operations and/or functions for computing device 500 as described herein according to software and/or instructions configured for computing device 500. Processor(s) 502 (e.g., a hardware processor) can execute any type of instructions associated with data to achieve the operations detailed herein. In one example, processor(s) 502 can transform an element or an article (e.g., data, information) from one state or thing to another state or thing. Any of potential processing elements, microprocessors, digital signal processor, baseband signal processor, modem, PHY, controllers, systems, managers, logic, and/or machines described herein can be construed as being encompassed within the broad term 'processor'.

In at least one embodiment, memory element(s) 504 and/or storage 506 is/are configured to store data, information, software, and/or instructions associated with computing device 500, and/or logic configured for memory element(s) 504 and/or storage 506. For example, any logic described herein (e.g., control logic 520) can, in various embodiments, be stored for computing device 500 using any combination of memory element(s) 504 and/or storage 506. Note that in some embodiments, storage 506 can be consolidated with memory element(s) 504 (or vice versa), or can overlap/exist in any other suitable manner.

In at least one embodiment, bus 508 can be configured as an interface that enables one or more elements of computing device 500 to communicate in order to exchange information and/or data. Bus 508 can be implemented with any architecture designed for passing control, data and/or information between processors, memory elements/storage, peripheral devices, and/or any other hardware and/or software components that may be configured for computing device 500. In at least one embodiment, bus 508 may be implemented as a fast kernel-hosted interconnect, potentially using shared memory between processes (e.g., logic), which can enable efficient communication paths between the processes.

In various embodiments, network processor unit(s) 510 may enable communication between computing device 500 and other systems, entities, etc., via network I/O interface(s) 512 (wired and/or wireless) to facilitate operations discussed for various embodiments described herein. In various embodiments, network processor unit(s) 510 can be configured as a combination of hardware and/or software, such as one or more Ethernet driver(s) and/or controller(s) or interface cards, Fibre Channel (e.g., optical) driver(s) and/or controller(s), wireless receivers/ transmitters/transceivers, baseband processor(s)/modem(s), and/or other similar network interface driver(s) and/or controller(s) now known or hereafter developed to enable communications between computing device 500 and other systems, entities, etc. to facilitate operations for various embodiments described herein. In various embodiments, network I/O interface(s) 512 can be configured as one or more Ethernet port(s), Fibre Channel ports, any other I/O port(s), and/or antenna(s)/antenna array(s) now known or hereafter developed. Thus, the network processor unit(s) 510 and/or network I/O interface(s) 512 may include suitable interfaces for receiving, transmitting, and/or otherwise communicating data and/or information in a network environment.

I/O interface(s) 514 allow for input and output of data and/or information with other entities that may be connected to computer device 500. For example, I/O interface(s) 514 may provide a connection to external devices such as a keyboard, keypad, a touch screen, and/or any other suitable input and/or output device now known or hereafter developed. In some instances, external devices can also include portable computer readable (non-transitory) storage media such as database systems, thumb drives, portable optical or magnetic disks, and memory cards. In still some instances, external devices can be a mechanism to display data to a user, such as, for example, a computer monitor, a display screen, or the like.

In various embodiments, control logic 520 can include instructions that, when executed, cause processor(s) 502 to perform operations, which can include, but not be limited to, providing overall control operations of computing device; interacting with other entities, systems, etc. described herein; maintaining and/or interacting with stored data, information, parameters, etc. (e.g., memory element(s), storage, data structures, databases, tables, etc.); combinations thereof; and/or the like to facilitate various operations for embodiments described herein.

The programs described herein (e.g., control logic 520) may be identified based upon application(s) for which they are implemented in a specific embodiment. However, it should be appreciated that any particular program nomenclature herein is used merely for convenience; thus, embodiments herein should not be limited to use(s) solely described in any specific application(s) identified and/or implied by such nomenclature.

In various embodiments, entities as described herein may store data/information in any suitable volatile and/or non-volatile memory item (e.g., magnetic hard disk drive, solid state hard drive, semiconductor storage device, random access memory (RAM), read only memory (ROM), erasable programmable read only memory (EPROM), application specific integrated circuit (ASIC), etc.), software, logic (fixed logic, hardware logic, programmable logic, analog logic, digital logic), hardware, and/or in any other suitable component, device, element, and/or object as may be appropriate. Any of the memory items discussed herein should be construed as being encompassed within the broad term 'memory element'. Data/information being tracked and/or sent to one or more entities as discussed herein could be provided in any database, table, register, list, cache, storage, and/or storage structure: all of which can be referenced at any suitable timeframe. Any such storage options may also be included within the broad term 'memory element' as used herein. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Note that in certain example implementations, operations as set forth herein may be implemented by logic encoded in one or more tangible media that is capable of storing instructions and/or digital information and may be inclusive of non-transitory tangible media and/or non-transitory computer readable storage media (e.g., embedded logic provided in: an ASIC, digital signal processing (DSP) instructions, software [potentially inclusive of object code and source code], etc.) for execution by one or more processor(s), and/or other similar machine, etc. Generally, memory element(s) 504 and/or storage 506 can store data, software, code, instructions (e.g., processor instructions), logic, parameters, combinations thereof, and/or the like used for operations described herein. This includes memory element(s) 504 and/or storage 506 being able to store data, software, code, instructions (e.g., processor instructions), logic, parameters, combinations thereof, or the like that are executed to carry out operations in accordance with teachings of the present disclosure.

In some instances, software of the present embodiments may be available via a non-transitory computer useable medium (e.g., magnetic or optical mediums, magneto-optic mediums, CD-ROM, DVD, memory devices, etc.) of a stationary or portable program product apparatus, downloadable file(s), file wrapper(s), object(s), package(s), container(s), and/or the like. In some instances, non-transitory computer readable storage media may also be removable. For example, a removable hard drive may be used for memory/storage in some implementations. Other examples may include optical and magnetic disks, thumb drives, and smart cards that can be inserted and/or otherwise connected to a computing device for transfer onto another computer readable storage medium.

### Variations and Implementations

Embodiments described herein may include one or more networks, which can represent a series of points and/or network elements of interconnected communication paths for receiving and/or transmitting messages (e.g., packets of information) that propagate through the one or more networks. These network elements offer communicative interfaces that facilitate communications between the network elements. A network can include any number of hardware and/or software elements coupled to (and in communication with) each other through a communication medium. Such networks can include, but are not limited to, any local area network (LAN), virtual LAN (VLAN), wide area network (WAN) (e.g., the Internet), software defined WAN (SD-WAN), wireless local area (WLA) access network, wireless wide area (WWA) access network, metropolitan area network (MAN), Intranet, Extranet, virtual private network (VPN), Low Power Network (LPN), Low Power Wide Area Network (LPWAN), Machine to Machine (M2M) network, Internet of Things (loT) network, Ethernet network/switching system, any other appropriate architecture and/or system that facilitates communications in a network environment, and/or any suitable combination thereof.

Networks through which communications propagate can use any suitable technologies for communications including wireless communications (e.g., 4G/5G/nG, IEEE 802.11 (e.g., Wi-Fi^{®}/Wi-Fi6^{®}), IEEE 802.16 (e.g., Worldwide Interoperability for Microwave Access (WiMAX)), Radio-Frequency Identification (RFID), Near Field Communication (NFC), Bluetooth^{™}, mm.wave, Ultra-Wideband (UWB), etc.), and/or wired communications (e.g., T1 lines, T3 lines, digital subscriber lines (DSL), Ethernet, Fibre Channel, etc.). Generally, any suitable means of communications may be used such as electric, sound, light, infrared, and/or radio to facilitate communications through one or more networks in accordance with embodiments herein. Communications, interactions, operations, etc. as discussed for various embodiments described herein may be performed among entities that may directly or indirectly connected utilizing any algorithms, communication protocols, interfaces, etc. (proprietary and/or non-proprietary) that allow for the exchange of data and/or information.

Communications in a network environment can be referred to herein as 'messages', 'messaging', 'signaling', 'data', 'content', 'objects', 'requests', 'queries', 'responses', 'replies', etc. which may be inclusive of packets. As referred to herein and in the claims, the term 'packet' may be used in a generic sense to include packets, frames, segments, datagrams, and/or any other generic units that may be used to transmit communications in a network environment. Generally, a packet is a formatted unit of data that can contain control or routing information (e.g., source and destination address, source and destination port, etc.) and data, which is also sometimes referred to as a 'payload', 'data payload', and variations thereof. In some embodiments, control or routing information, management information, or the like can be included in packet fields, such as within header(s) and/or trailer(s) of packets. Internet Protocol (IP) addresses discussed herein and in the claims can include any IP version 4 (IPv4) and/or IP version 6 (IPv6) addresses.

To the extent that embodiments presented herein relate to the storage of data, the embodiments may employ any number of any conventional or other databases, data stores or storage structures (e.g., files, databases, data structures, data or other repositories, etc.) to store information.

Note that in this Specification, references to various features (e.g., elements, structures, nodes, modules, components, engines, logic, steps, operations, functions, characteristics, etc.) included in 'one embodiment', 'example embodiment', 'an embodiment', 'another embodiment', 'certain embodiments', 'some embodiments', 'various embodiments', 'other embodiments', 'alternative embodiment', and the like are intended to mean that any such features are included in one or more embodiments of the present disclosure, but may or may not necessarily be combined in the same embodiments. Note also that a module, engine, client, controller, function, logic or the like as used herein in this Specification, can be inclusive of an executable file comprising instructions that can be understood and processed on a server, computer, processor, machine, compute node, combinations thereof, or the like and may further include library modules loaded during execution, object files, system files, hardware logic, software logic, or any other executable modules.

It is also noted that the operations and steps described with reference to the preceding figures illustrate only some of the possible scenarios that may be executed by one or more entities discussed herein. Some of these operations may be deleted or removed where appropriate, or these steps may be modified or changed considerably without departing from the scope of the presented concepts. In addition, the timing and sequence of these operations may be altered considerably and still achieve the results taught in this disclosure. The preceding operational flows have been offered for purposes of example and discussion. Substantial flexibility is provided by the embodiments in that any suitable arrangements, chronologies, configurations, and timing mechanisms may be provided without departing from the teachings of the discussed concepts.

As used herein, unless expressly stated to the contrary, use of the phrase 'at least one of, 'one or more of, 'and/or', variations thereof, or the like are open-ended expressions that are both conjunctive and disjunctive in operation for any and all possible combination of the associated listed items. For example, each of the expressions 'at least one of X, Y and Z', 'at least one of X, Y or Z', 'one or more of X, Y and Z', 'one or more of X, Y or Z' and 'X, Y and/or Z' can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z.

Additionally, unless expressly stated to the contrary, the terms 'first', 'second', 'third', etc., are intended to distinguish the particular nouns they modify (e.g., element, condition, node, module, activity, operation, etc.). Unless expressly stated to the contrary, the use of these terms is not intended to indicate any type of order, rank, importance, temporal sequence, or hierarchy of the modified noun. For example, 'first X' and 'second X' are intended to designate two 'X' elements that are not necessarily limited by any order, rank, importance, temporal sequence, or hierarchy of the two elements. Further as referred to herein, 'at least one of and 'one or more of can be represented using the '(s)' nomenclature (e.g., one or more element(s)).

One or more advantages described herein are not meant to suggest that any one of the embodiments described herein necessarily provides all of the described advantages or that all the embodiments of the present disclosure necessarily provide any one of the described advantages. Numerous other changes, substitutions, variations, alterations, and/or modifications may be ascertained to one skilled in the art and it is intended that the present disclosure encompass all such changes, substitutions, variations, alterations, and/or modifications as falling within the scope of the appended claims.

## Claims

1. System for providing quantum computing as a service, the system comprising:
- a frontend computing system (1) comprising a frontend computer program,
- a backend computing system (2), and
- a quantum computer (3),
the frontend computer program being a spreadsheet application and being configured to receive a service request (4) from a user, the service request (4) comprising service request parameters and input data (13), the frontend computing system (1) being configured to store the input data (13) in the spreadsheet application and to send the service request (4) to the backend computing system (2),
the backend computing system (2) being configured to receive the service request (4) from the frontend computing system (1), to encode the service request (4) to a service job in a format suitable for the quantum computer to execute the service request (4), and to submit the service job to the quantum computer (3),
the quantum computer (3) being configured to execute the service job and to provide service job results to the backend computing system (2),
the backend computing system (2) being configured to translate the service job results into results data (14) and to send the results data to the frontend computing system (1), and
the frontend computing system (1) being configured to receive the results data (14), to store the results data (14) in the spreadsheet application, and to display the results data (14) in a spreadsheet application interface associated with the spreadsheet application.

2. System according to claim 1, wherein the spreadsheet application comprises a plurality of spreadsheet cells configured to store the input data (13), a parameter control (11) configured to receive a service request parameter, and a command control (12) configured to send the service request (4) to the backend computing system (2).

3. System according to claim 2, wherein the spreadsheet application comprises a spreadsheet plug-in, the spreadsheet plug-in being configured to manage the plurality of spreadsheet cells, the spreadsheet plug-in comprising the parameter control (11) and the command control (12).

4. System according to claim 3, wherein the spreadsheet plug-in is configured to receive the results data (14) from the backend computing system (2), to store the results data (14) in an additional plurality of spreadsheet cells, and to display the results data (14) in the spreadsheet application interface.

5. System according to any of the preceding claims, wherein the backend computing system (2) is configured to clean and reformat the input data (13) before encoding the service request (4) to a service job.

6. System according to any of the preceding claims, wherein the service request (4) is an optimization request.

7. System according to any of the preceding claims, wherein the service job is encoded as a quadratic binary optimization problem.

8. System according to any of the preceding claims, wherein the backend computing system (2) is configured to select a best result from the results data (14).

9. System according to any of the preceding claims, wherein the quantum computer (3) is a DWave quantum computer.

10. Computer implemented method for providing quantum computing as a service, the computer implemented method comprising:
- receiving a service request (4) comprising service request parameters and input data (13) at a backend computing system (2) from a frontend computing system (1), the frontend computing system (1) being configured to receive the service request (4) from a user at a spreadsheet application executable at the frontend computing system (1) and to store the input data (13) in the spreadsheet application,
- the backend computing system (2) encoding the service request (4) to a service job in a format suitable for a quantum computer (3) to execute the service request (4), and submitting the service job to the quantum computer (3), the quantum computer (3) being configured to execute the service job and to provide service job results,
- the backend computing system (2) receiving the service job results from the quantum computer (3), and
- the backend computing system (2) translating the service job results into results data (14) and sending the results data (14) to the frontend computing system (1), the frontend computing system (1) being configured to receive the results data (14), to store the results data (14) in the spreadsheet application, and to display the results data (14) in a spreadsheet application interface associated with the spreadsheet application.

11. Computer implemented method according to claim 10, wherein the frontend computing system (1) is configured to store the input data (13) in a plurality of spreadsheet cells of the spreadsheet application, to receive at least one service request parameter in a parameter control (11) of the spreadsheet application, and to receive a command input in a command control (12) of the spreadsheet application.

12. Computer implemented method according claim 11, wherein the spreadsheet application comprises a spreadsheet plug-in configured to manage the plurality of spreadsheet cells, the spreadsheet plug-in comprising the parameter control (11) and the command control (12), the spreadsheet plug-in being configured to send service request parameters and input data (13) to the backend computing system (2) upon receiving the command input in the command control (12).

13. Computer implemented method according to any of claims 10 to 12, wherein the spreadsheet plug-in is configured to receive the results data (14) from the backend computing system (2), to store the results data (14) in an additional plurality of spreadsheet cells, and to display the results data (14) in the spreadsheet application interface upon receiving the results data (14), storing, and displaying the results data (14) in the spreadsheet application by the frontend computing system (1).

14. Computer implemented method according to any of claims 10 to 13, comprising the backend computing system (2) cleaning and reformatting the input data (13) after receiving the service request (4) from the frontend computing system (1), and before encoding the service request (4) to a service job.

15. Computer implemented method according to any of claims 10 to 14, comprising the backend computing system (2) selecting a best result from the results data (14) before sending the results data (14) to the frontend computing system (1).
